# EUROPEAN PATENT APPLICATION

(11) **EP 2 369 874 A1**
(43) Date of publication of application: **28.09.2011**
(21) Application number: 09833154.9
(22) Date of filing: 08.12.2009
(51) Int. Cl.: H04W 48/12, H04H 20/42, H04H 20/57, H04H 60/43, H04W 4/06, H04W 16/32

(54) **WIRELESS COMMUNICATION SYSTEM, WIRELESS COMMUNICATION DEVICE, WIRELESS TERMINAL, AND SYMBOL ARRANGEMENT DEVICE THEREOF**

(30) Priority: 19.12.2008 JP 2008323791; 26.08.2009 JP 2009195378
(71) Applicant: Sharp Kabushiki Kaisha, Osaka-shi, Osaka 545-8522 (JP)
(72) Inventor: ISHIKURA, Katsutoshi, Osaka 545-8522 (JP); TSUNEKAWA, Koichi, Osaka 545-8522 (JP); KAMENO, Toshiaki, Osaka 545-8522 (JP); KONNO, Yoshio, Osaka 545-8522 (JP)
(74) Representative: Müller - Hoffmann & Partner
(86) International application number: PCT/JP2009/006696
(87) International publication number: WO 2010/070844

(57) **Abstract**

In MBMS system, a plurality of MBMS areas are geographically arranged to provide multimedia broadcast/multicast service (MBMS) to wireless terminals located in the plurality of MBMS areas, the plurality of MBMS areas having cell pattern including single frequency network (SFN) using predetermined frequency band. The plurality of MBMS areas are arranged using different frequency bands to simultaneously provide different MBMSs to wireless terminal located at a given point.

## Description

### TECHNICAL FIELD

The present invention relates to a wireless communication system, a wireless communication apparatus, a wireless terminal, and a symbol arrangement apparatus.
This application claims priority to and the benefits of Japanese Patent Application No. 2008-323791 filed on December 19, 2008 and Japanese Patent Application No. 2009-195378 filed on August 26, 2009, the disclosures of which are incorporated herein by reference.

### BACKGROUND ART

Third generation mobile communication technology, which is a WCDMA (wideband code division multiple access) system, has been developed to achieve high spectrum use efficiency, high communication quality, and rapid transmission. In order to enhance a multimedia function of a third generation mobile communication system, an MBMS is defined in a communication protocol established by 3GPP (Third Generation Partnership Project). The MBMS (multimedia broadcast/multicast service) is built on a conventional UMTS (universal mobile telecommunication system) network structure, and enables the same service to be simultaneously provided from a data source to a plurality of users via an IP (Internet protocol) packet.
Thus, the MBMS is a broadcast/multicast service using a mobile and packet network.

Meanwhile, in a current moving image content distribution service, content is transmitted in a CS (circuit switching) area, and a point-to-point connection is established between each user receiving the service and a server to provide the content using streaming.

Further, in a current television or radio broadcast, a frequency band (channel) in which service is performed is determined by a region. A band that can be received is initially searched and then a band of a broadcast desired to be watched by a user of the region is designated and received. However, in the television or radio broadcast, only one broadcasting service station is in one service area, service is not provided while a cell in the area is being switched, and a connection with a reception terminal is performed in the CS area, as in content distribution service.

When a multimedia service is simultaneously provided to a number of users, multicast service is necessary. Service in which a multicast connection is performed in a PS (packet switching) area is the MBMS, and a point-to-multipoint radio channel has been studied. Thus, a connection manner differs between the MBMS and a conventional moving image content distribution service or television or radio broadcast.

In order to enhance reception efficiency of the MBMS, an RRC (radio resource control) protocol standard and an enhancement request suggested by 3GPP defines that the MBMS is transmitted with a carrier of a single frequency network (SFN) to reduce service interruption due to frequency switching in an MBMS transmission process.

Further, in the MBMS, use of any one or both of an MBMS/unicast-mixed cell using a frequency band used with services other than the MBMS and an MBMS-dedicated cell using an MBMS-dedicated frequency band has been studied.

In both cases, MBMS transmission is performed in an SFN. This case is called MBMS SFN (or MBSFN: multimedia broadcast single frequency network, for short). The MBMS and a wireless communication system providing the MBMS are disclosed in Patent Document 1 and Non-Patent Documents 1 to 3.

The MBMS/unicast-mixed cell or the MBMS-dedicated cell is defined in Chapter 15.2 of Non-Patent Document 1. In particular, for the MBMS-dedicated cell, an upstream signal from a wireless terminal to the cell does not exist and only a downstream signal from the cell to the wireless terminal exists, unlike the MBMS/unicast-mixed cell. Further, a broadcast channel for the MBMS-dedicated cell is common to MBSFN (Multimedia Broadcast Multicast service Single Frequency Network) areas or specific to the cell, as disclosed in Non-Patent Documents 2 and 3. Here, in particular, it is not specified in the 3GPP system disclosed in Non-Patent Document 1 how a D-MBMS (dedicated MBMS) is concretely managed.

Further, in Patent Document 1, a notification of an ID of the MBMS is disclosed, and a terminal being notified of the ID of the MBMS (called an MBMS identifier) together with a cell identifier indicating a cell transmitting the MBMS by a paging message is also disclosed.

Patent Document 1: Japanese Patent Application Publication No. 2007-503158

Non-Patent Document 1: 3GPP TS 36.300 V8.5.0
Non-Patent Document 2: 3GPP enhancement request R1-074339
Non-Patent Document 3: 3GPP enhancement request R1-080826

### DISCLOSURE OF INVENTION

### Problem to be Solved by the Invention

A current television or radio broadcasting service is provided using a plurality of frequency bands (channels) according to regions. Providing an MBMS using such a broadcasting service system will now be considered.

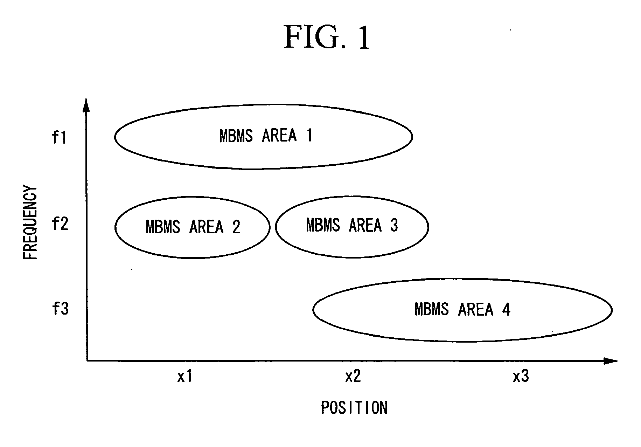

FIG 1 shows a conceptual diagram of a broadcasting service system which provides the MBMS, in which the MBMS is provided in a spot manner in various frequency bands. A vertical direction indicates a frequency band in which the MBMS is performed, and a horizontal direction indicates a position of a reception terminal. Four service areas are installed. The MBMS is provided in a frequency band f1 in an MBMS area 1, in a frequency band f2 in an MBMS area 2, in a frequency band f2 in an MBMS area 3, and in a frequency band f3 in an MBMS area 4.

One service area includes one broadcasting service station. In the broadcasting service system as shown in FIG. 1, when the MBMS is desired to be performed at a new spot, it is necessary to install another new broadcasting service station. Further, it is difficult to freely change a shape of the MBMS area. Accordingly, in the broadcasting service system having the form as shown in FIG 1, it is difficult to provide a flexible MBMS.

Further, in the service system of FIG 1, for a method of performing search of service prior to reception of the service as in a current television broadcast, it is necessary to perform search of all services (frequencies) each time a reception terminal moves to positions x1, x2 and x3. Accordingly, in the service system of FIG 1 in which service is performed in a relatively narrow area, selection of the service is very troublesome. Further, there is a problem in that search time greatly increases when a serviced frequency band is dynamic.

The present invention is made in view of the aforementioned problems and has an object to provide a wireless communication system, and a wireless transmission apparatus and a wireless terminal used in the system, which are capable of flexibly and dynamically providing an MBMS.

### Means for Solving the Problem

In first aspect of the present invention, there is provided a wireless communication system including a plurality of areas including a plurality of cells each including a single frequency network using a given frequency band, and providing multimedia broadcast/multicast service to wireless terminals located in the areas, the areas being arranged in directions of a plurality of different positions and a plurality of different frequencies, wherein the plurality of areas using different frequency bands are arranged to overlap each other so that different multimedia broadcast/multicast services can be simultaneously provided to the wireless terminal located at a given point.

According to the wireless communication system of the present invention, it is possible to flexibly and dynamically perform multimedia broadcast/multicast service, such as service of areas having various forms and sizes, and a setup of various service periods, using existing base stations arranged in cells of a wireless mobile system without adding a new base station.

In the first aspect of the present invention, each cell may include a wireless transmission apparatus which transmits the multimedia broadcast/multicast service, and the wireless transmission apparatus may transmit a signal common to respective cells of a multimedia broadcast/multicast service area to which the apparatus belongs among multimedia broadcast/multicast service areas in the area, and a signal specific to a cell to which the apparatus belongs. In addition, the specific signal may include service information about other multimedia broadcast/multicast service areas that simultaneously provide different multimedia broadcast/multicast services. In addition, the service information may be band information, the band information indicating the frequency band used for the multimedia broadcast/multicast service in the other multimedia broadcast/multicast service areas, and service content.

Such a configuration allows the wireless terminal to obtain information on a plurality of multimedia broadcast/multicast service areas flexibly according to its position. Further, the wireless terminal can obtain the band information flexibly according to its position without searching for all frequency bands performing service.

In the first aspect of the present invention, the specific signal may include position information of the multimedia broadcast/multicast service area to which the apparatus belongs. In addition, the position information may be area edge information indicating a boundary of a multimedia broadcast/multicast service area to which the apparatus belongs.

Even when the reception level of the cell-common signal temporarily decreases due to effects of a surrounding environment, such a configuration can prevent switching to service of another multimedia broadcast/multicast service area from occurring in spite of the wireless terminal being in the multimedia broadcast/multicast service area. Further, the user can recognize that the wireless terminal is at a boundary of the multimedia broadcast/multicast service area, and determine to stop a movement when the user is performing broadcast recording.

In the first aspect of the present invention, the specific signal may include a broadcast signal used to transmit the service information. In addition, the specific signal may include a broadcast signal used to transmit the position information. In addition, the specific signal may include a synchronization signal including code specific to each cell. In addition, the specific signal may include a reference signal specific to each cell. In addition, the common signal may include multimedia broadcast/multicast service data, and a reference signal common to the respective cells.

This configuration allows for fast cell search when searching a cell specific to the multimedia broadcast/multicast service area. Further, it is possible to increase accuracy of broadcast signal demodulation in the wireless terminal.

In second aspect of the present invention, there is provided a wireless transmission apparatus included in each cell of the multimedia broadcast/multicast service system, which transmits the multimedia broadcast/multicast service, wherein the wireless transmission apparatus transmits a signal common to respective cells of a multimedia broadcast/multicast service area to which the apparatus belongs, and a signal specific to a cell to which the apparatus belongs. Further, when a multimedia broadcast/multicast service is performed in one frequency band, position information of the multimedia broadcast/multicast service area is included in a specific signal.

In the second aspect of the present invention, the service information may be band information, the band information indicating the frequency band used for the multimedia broadcast/multicast service in the other multimedia broadcast/multicast service areas, and service content.
In addition, the specific signal may include position information of the multimedia broadcast/multicast service area to which the apparatus belongs.
In addition, the position information may be area edge information indicating a boundary of the multimedia broadcast/multicast service area to which the apparatus belongs.

In the second aspect of the present invention, the specific signal may include a broadcast signal used to transmit the service information.
In addition, the specific signal may include a broadcast signal used to transmit the position information.
In addition, the specific signal may include a synchronization signal including code specific to each cell.

In the second aspect of the present invention, the specific signal may include a reference signal specific to each cell.
In addition, the common signal may include multimedia broadcast/multicast service data and a reference signal common to the respective cells.

In third aspect of the present invention, there is provided a wireless terminal which receives the multimedia broadcast/multicast service transmitted by the wireless transmission apparatus, the wireless terminal including: a first demodulation unit which demodulates the common signal; and a second demodulation unit which demodulates the specific signal.
The use of such a configuration allows multimedia broadcast/multicast service information to be received from the wireless transmission apparatus of the present invention, and the band information to be obtained flexibly according to a position without searching for all frequency bands performing service.

In the third aspect of the present invention, the second demodulation unit may demodulate the specific signal by performing estimation of a propagation channel for the specific signal using a reference signal included in the specific signal.
In addition, the second demodulation unit may demodulate the specific signal by performing estimation of a propagation channel for the specific signal using a synchronization signal included in the specific signal.

In the third aspect of the present invention, the specific signal may include service information about other multimedia broadcast/multicast service areas that simultaneously provide different multimedia broadcast/multicast services, the service information including band information indicating the frequency band used for the multimedia broadcast/multicast service in the other multimedia broadcast/multicast service areas, and service content, and the wireless terminal detects a frequency band in which one multimedia broadcast/multicast service is performed, and then performs search of another multimedia broadcast/multicast service that can be received by acquiring the band information from the specific signal.

In the third aspect of the present invention, the common signal may include multimedia broadcast/multicast service data, and a reference signal common to respective cells, and when a reception level of the common reference signal is smaller than a given threshold, the wireless terminal may select the other multimedia broadcast/multicast service that can be received, based on the acquired band information.

In the third aspect of the present invention, the specific signal may include position information of the multimedia broadcast/multicast service area to which the wireless terminal belongs, the position information including area edge information indicating a boundary of the multimedia broadcast/multicast service area to which the wireless terminal belongs, and when a reception level of the common reference signal is smaller than a given threshold and the acquired area edge information indicates the boundary, the wireless terminal may select the other multimedia broadcast/multicast service that can be received, based on the acquired band information.

The configuration as described above allows for high demodulation accuracy of the broadcast signal. Further, even when the cell-specific reference signal is not provided, the broadcast signal demodulation can be performed using a cell-specific synchronization signal.
Further, when the wireless terminal moves, it is possible to smoothly perform handover of the multimedia broadcast/multicast service area without performing the service search again. It is also possible to identify a boundary of the multimedia broadcast/multicast service area with certainty.

In fourth aspect of the present invention, there is provided a symbol arrangement method of arranging, in a symbol arrangement table, an MBMS data symbol, a BCH symbol, a primary synchronization symbol, a secondary synchronization symbol, a cell-common reference signal symbol, and a cell-specific reference signal symbol obtained by modulating multimedia broadcast/multicast service data, control data, and a broadcast signal, the symbol arrangement table being formed by arranging frames at given subcarrier intervals in a frequency axis direction, and the frame including ten sub-frames, each including a plurality of OFDM symbols, coupled in a time axis direction, wherein the sub-frames are classified into 3, the cell-common reference signal symbol and the MBMS data symbol being arranged in the sub-frames of a first classification, the primary synchronization symbol, the secondary synchronization symbol, the cell-specific reference signal symbol and the BCH symbol being arranged in the sub-frames of a second classification, and the cell-common reference signal symbol, the MBMS data symbol, the primary synchronization symbol and the secondary synchronization symbol being arranged in the sub-frames of a third classification.

In the fourth aspect of the present invention, the symbols may be in the sub-frames of the second classification and the third classification, with a subcarrier interval of the primary synchronization symbol and the secondary synchronization symbol being a frequency interval that is twice the subcarrier interval of the other symbols.

### Effect of the Invention

In the system of the present invention, it is possible to flexibly and dynamically perform services in the MBMS, such as services of areas having various shapes and sizes, and a setup of various service periods, using base stations installed in an existing wireless mobile system without adding a new base station.

It is also possible to flexibly obtain the band information according to a position without performing all-frequency search in a region in which the MBMS is performed in a plurality of frequency bands, as in the system of the present invention. Thereby, it is possible to rapidly receive a desired service.
Further, even when a terminal moves and crosses between MBMS areas, it is possible to cross while holding the band information and it is unnecessary to search for a desired service one by one.

### BRIEF DESCRIPTION OF THE DRAWINGS

FIG. 1 is a conceptual diagram of a broadcasting service system.
FIG. 2 is a conceptual diagram of an MBMS system of the present invention.
FIG. 3a is a conceptual diagram of a system in which a base station is different for each MBMS service.
FIG. 3b is a conceptual diagram of a system in which the same base station performs a plurality of MBMSs.
FIG. 4 is a functional block diagram showing a configuration of a transmission unit of a base station according to the present invention.
FIG. 5 is a diagram showing a signal format for a base station.
FIG. 6a is a diagram showing a symbol arrangement of sub-frames.
FIG. 6b is a diagram showing a symbol arrangement of sub-frames.
FIG 6c is a diagram showing a symbol arrangement of sub-frames.
FIG. 6d is a diagram showing a symbol arrangement of sub-frames.
FIG 6e is a diagram showing a symbol arrangement of sub-frames.
FIG. 7 is an illustrative diagram of MBMS band information included in broadcast information.
FIG. 8 is a functional block diagram showing a configuration of a wireless terminal of the present invention.
FIG 9 is a diagram showing an MBMS reception flow according to the present invention.
FIG. 10a is a diagram (1) showing a reception flow when a wireless terminal moves between MBMS areas.
FIG. 10b is a diagram (2) showing a reception flow when a wireless terminal moves between MBMS areas.
FIG. 11 is a conceptual diagram of a wireless communication system that provides an MBMS according to another embodiment of the present invention.
FIG 12 is an illustrative diagram of MBMS band information in the wireless communication system shown in FIG. 11.

### BEST MODE FOR CARRYING OUT THE INVENTION

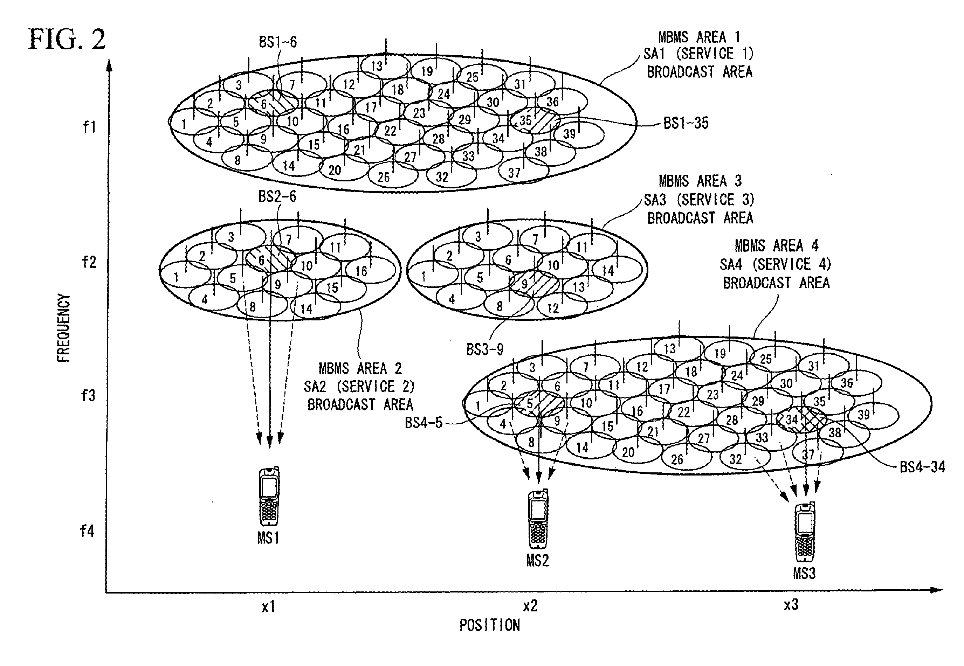

FIG 2 shows a conceptual diagram of a wireless communication system (hereinafter referred to as an MBMS system) that provides MBMS (multimedia broadcast/multicast service) in the present invention. FIG 2 shows a state in which MBMS such as voice and an image that may be used by all terminals in common is serviced in a spot manner in various frequency bands, like FIG 1. In the present MBMS system, a wireless communication system using an orthogonal frequency division multiplexing (OFDM) technique may be used.

In FIG. 2, a vertical direction indicates a frequency band in which the MBMS is provided, and a horizontal direction indicates a position of a wireless terminal. In FIG. 2, a state in which four MBMSs are provided in frequency bands f1 to f4 in regions including positions x1 to x3 is shown. In an MBMS area 1, the MBMS is provided in a frequency band f1. In an MBMS area 2, the MBMS is provided in a frequency band f2. In an MBMS area 3, an MBMS is provided in a frequency band f2. In an MBMS area 4, the MBMS is provided in a frequency band f3. At this point, the MBMS is not provided in a frequency band f4. In one MBMS area, the same content is serviced. Four MBMSs are provided in the MBMS areas 1 to 4, respectively, and an SA1 broadcast, an SA2 broadcast, an SA3 broadcast, and an SA4 broadcast are provided respectively. The respective MBMS areas 1 to 4 include a plurality of cells, and a base station (BS) is provided in each cell. Here, FIG. 2 shows the areas divided in terms of services, in which the base stations of the MBMS areas 1 and 2 may be the same base station. For example, base stations BS1-6 and BS2-6 may be the same. That is, there is a case in which one base station may provide a plurality of MBMSs.

Each cell (base station) broadcasts information necessary for communication with the wireless terminal as a broadcast signal. As will be described below, in an embodiment of the present invention, band information according to the present invention, i.e., MBMS information in a position of the wireless terminal, is broadcasted using the broadcast signal. Accordingly, the broadcast signal is different from a cell to a cell. Here, the present invention is not limited to cell-specific MBMS information according to the present invention being transmitted using the broadcast signal, but the present invention can be implemented as long as the information is transmitted using different signals from a cell to a cell. Usually, for information data of MBMS service (SA), common data is transmitted from all cells belonging to the MBMS area, and the wireless terminal synthesizes information data from the plurality of cells to perform reception. Meanwhile, since synthesis cannot be performed on broadcast signals different from a cell to a cell, only a broadcast signal from the highest level cell is received.

A state in which a position x1 is a point where the SA1 and SA2 broadcasts can be received but a wireless terminal MS1 receives the SA2 broadcast is shown. The wireless terminal MS1 is in a cell of the base station BS2-6 (BS1-6), the broadcast signal is received only from the base station BS2-6, and other SA2 information data is received from a plurality of peripheral cells such as the base stations BS2-6 and BS2-5 or BS2-9. The wireless terminal MS1 synthesizes and uses the received signals. Although it will be described below in detail, the wireless terminal MS1 is notified of information specific to the position x1, e.g., a frequency band and service content serviced in the position, through the broadcast signal, and the wireless terminal MS1 recognizes that the SA1 broadcast other than the currently received SA2 broadcast can be received.

Similarly, a wireless terminal MS2 in the position x2 recognizes that the SA1 broadcast, the SA3 broadcast, and the SA4 broadcast can be received, and receives the current SA4 broadcast. Further, a wireless terminal MS3 in the position x3 recognizes that only the SA4 broadcast can be received, and currently receives the SA4 broadcast. Thus, in the system of the present invention, a plurality of MBMS areas using different frequency bands are arranged to overlap each other, so that different MBMSs can be simultaneously provided to a wireless terminal located at a certain point.

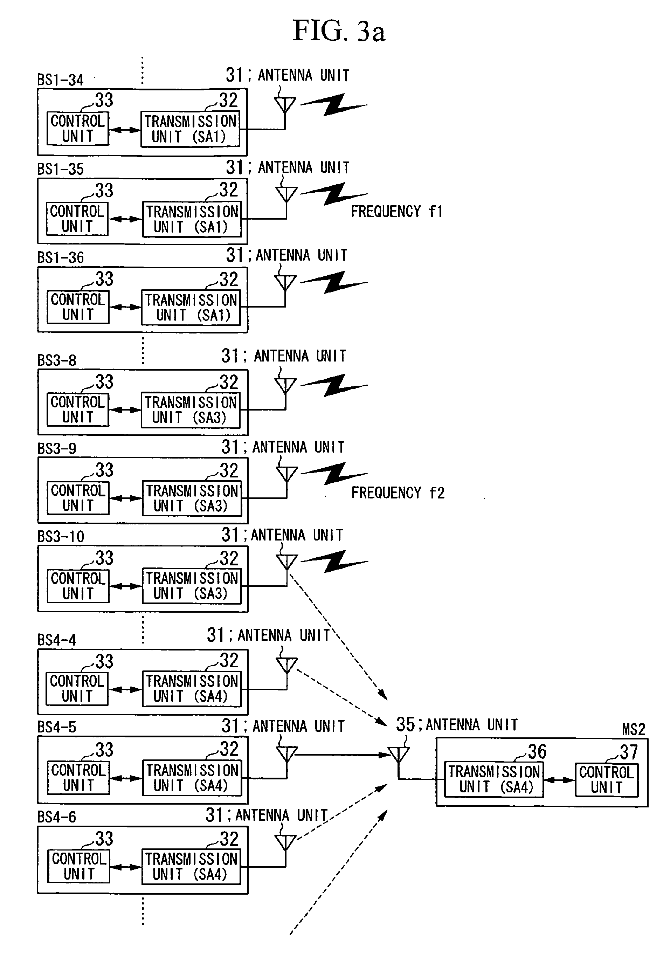

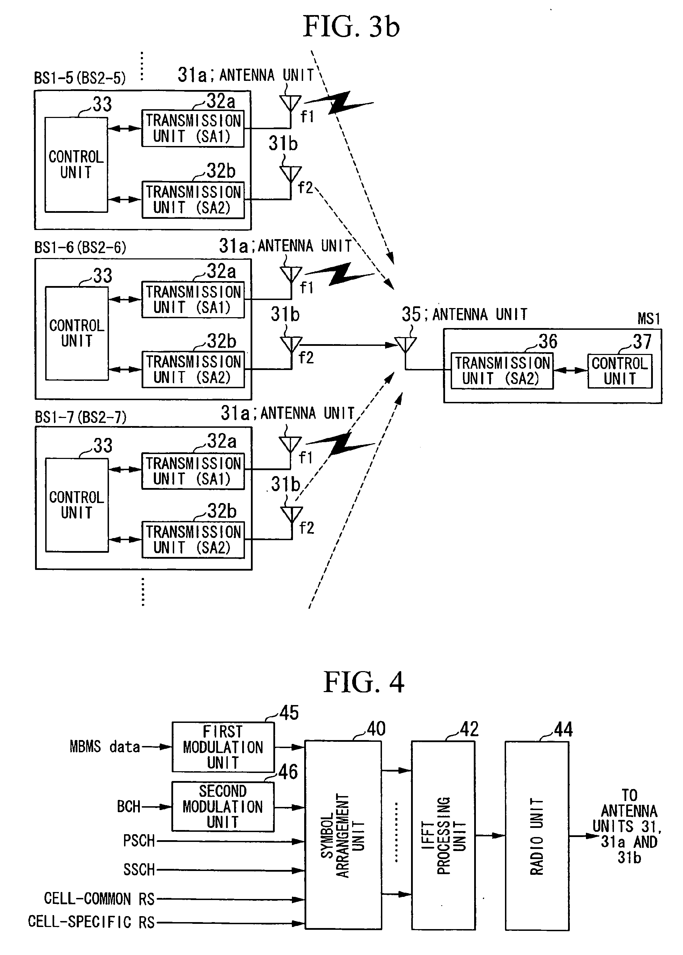

In the system of the present invention described above, the MBMS such as service of areas having various forms and sizes, and a setup of various service periods can be flexibly and dynamically performed without adding a new base station by using existing base stations (e.g., BS2-6 and BS1-6 are the same base stations as will be described below in FIG. 3b). Of course, a new base station may be installed instead of using an existing base station, as in FIG. 3a to be described below.

In the following embodiment, a configuration of a base station and a wireless terminal in an environment in which such an MBMS of the present invention is performed will be described.

FIG. 3a shows a configuration of base stations and a wireless terminal, and a transmission and reception state when the wireless terminal is in the position x2 of FIG. 2. In FIG. 3a, a state in which a wireless terminal MS2 receives an SA4 broadcast provided in a frequency band f3 is shown. The wireless terminal MS2 is in a cell of each of a base station BS1-35 providing a service in a frequency band f1, a base station BS3-9 providing a service in a frequency band f2, and a base station BS4-5 providing service in a frequency band f3, but the wireless terminal MS2 receives service provided in the frequency band f3. Accordingly, the wireless terminal MS2 performs communication only with the base station BS4-5 providing service in the frequency band f3 and its peripheral cells (e.g., base stations BS4-4 and BS4-6). That is, the wireless terminal MS2 does not perform communication with the base station BS1-35 providing a service in a frequency band f1 and the peripheral cells (e.g., base stations BS1-34 and BS1-36), and the base station BS3-9 providing a service in a frequency band f2 and its peripheral cells (e.g., base stations BS3-8 and BS3-10). Further, the wireless terminal MS2 receives a cell-specific broadcast signal only from the base station BS4-5, and synthesizes and receives, for SA4 broadcast data, signals from the base station BS4-5 and the peripheral cells (e.g., base stations BS4-4 and BS4-6).

Further, each of the base stations (···, BS1-34, BS1-35, BS1-36, ···, BS3-8, BS3-9, BS3-10, ···, BS4-4, BS4-5, BS4-6, ···) includes a wireless transmission apparatus including an antenna unit 31 which transmits an OFDM signal in a radio frequency band, a transmission unit 32 which performs a process for an MBMS transmission signal of the base station, and a control unit 33 which performs various controls of the base station. The wireless terminal MS2 includes an antenna unit 35 which receives an OFDM signal in a radio frequency band, a reception unit 36 which performs a process for an MBMS reception signal of the wireless terminal MS2, and a control unit 37 which performs various controls of the wireless terminal.

While FIG. 3a shows that the base station has a different configuration for each service, the base station need not differ for each service and the same base station may perform a plurality of services. FIG. 3b is a diagram showing a configuration in such a case.

FIG 3b shows a configuration of base stations and a wireless terminal, and a transmission and reception state when the wireless terminal is in the position x1 of FIG. 2. In FIG. 3b, a state in which a terminal MS1 receives an SA2 broadcast that provides a service in a frequency band f2 is shown. The wireless terminal MS1 is in a cell of a base station BS1-6 (BS2-6) that provides a plurality of services in a frequency band f1 and the frequency band f2, and performs communication with the base station BS1-6 (BS2-6) and its peripheral cells (e.g., a base station BS1-5 (BS2-5) and a base station BS1-7 (BS2-7)). Since the wireless terminal MS1 receives the service provided in the frequency band f2, it receives the SA2 broadcast. Further, the wireless terminal MS1 receives a cell-specific broadcast signal only from the base station BS 1-6 (BS2-6) and SA2 broadcast data from the base station BS1-6 (BS2-6) and the peripheral cells (e.g., the base station BS1-5 (BS2-5) and BS1-7 (BS2-7)), and synthesizes and uses the received signals.
Position information of an MBMS area to which the cell belongs is included in the cell-specific broadcast signal.

Further, each of the base stations (···, BS1-5 (BS2-5), BS1-6 (BS2-6), BS1-7 (BS2-7), ···,) includes two antenna units 31a and 31b which transmit an OFDM signal in different radio frequency bands f1 and f2, two transmission units (SA1 and SA2) 32a and 32b which perform a process for MBMS transmission signals of different services of the base station, and a control unit 33 which performs various controls of the base station. Here, while the base station includes the two antenna units and the two transmission units, the base station may include three or more antenna units and three or more transmission units to simultaneously correspond to more services. The wireless terminal (MS1) includes an antenna unit 35 which receives the OFDM signal in a given radio frequency band, a reception unit 36 which performs a process for an MBMS reception signal of the wireless terminal MS1, and a control unit 37 which performs various controls of the wireless terminal MS1, like the wireless terminal MS2 of FIG. 3a.

Next, a function of a transmission unit of a base station according to the present invention will be briefly described. FIG. 4 is a functional block diagram showing a configuration of the transmission unit of the base station (corresponding to the transmission unit of the base stations 32, 32a and 32b in FIGS. 3a and 3b) according to the present invention. First, data (MBMS data), such as MBMS data corresponding to MBMS information common to all users or control data corresponding to a control signal is input to a first modulation unit 45. In the first modulation unit 45, modulation corresponding to all data is performed and modulated data symbol is obtained. For example, when a communication environment of a service area served by the base station is good, the MBMS data is modulated with 64QAM and control data is modulated with QPSK, and respective data symbols are obtained. Further, a broadcast channel (BCH) that transmits a broadcast signal for broadcasting, for example, a parameter necessary for communication is input to a second modulation unit 46. The BCH in the present embodiment is a cell-specific BCH. In the second modulation unit 46, modulation corresponding to all data is performed and a modulated BCH symbol is obtained. For example, the data is modulated, for example, with QPSK and a BCH symbol is obtained. The modulated data symbol and the BCH symbol are input to a symbol arrangement unit 40. Synchronization signals for signal synchronization from synchronization channels (PSCH: primary synchronization channel and SSCH: secondary synchronization channel), and reference signals (RS) are also input to the symbol arrangement unit 40.

In the present embodiment, the channels include two synchronization channels PSCH and SSCH for rapid synchronization with a desired cell. For example, the PSCH for first synchronization includes three types of codes. ID candidates of a desired cell ID are selected by identifying the codes. Then, the desired cell ID is identified from among the ID candidates using the SSCH for next synchronization to achieve rapid synchronization. The synchronization channels are not limited to the present embodiment, and the PSCH may be allocated an MBMS service ID (cell-common PSCH), and the SSCH may be allocated a desired cell ID. Alternatively, the channel may include one type of synchronization channel.

The reference signals RS of the present embodiment include a cell-common RS and a cell-specific RS. The cell-common RS is used, for example, for channel estimation for MBMS data demodulation, and the cell-specific RS is used, for example, for channel estimation for cell-specific BCH demodulation.

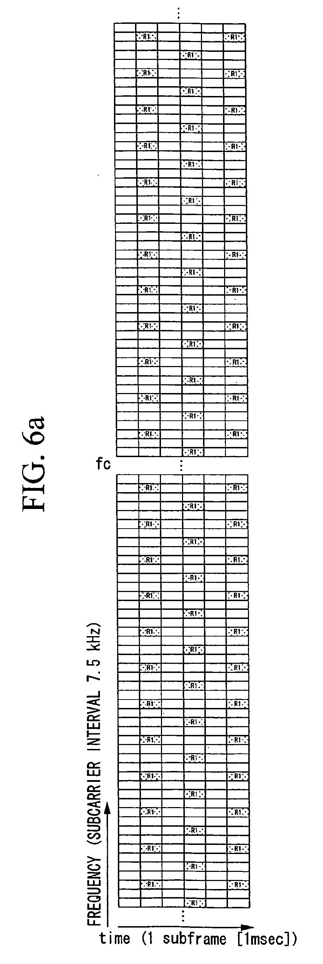

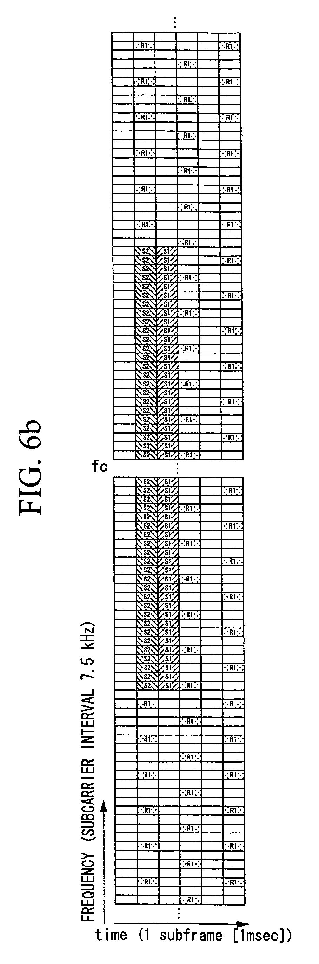

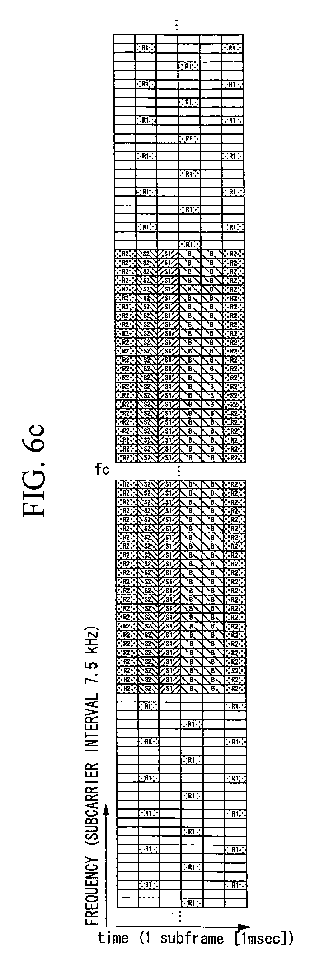

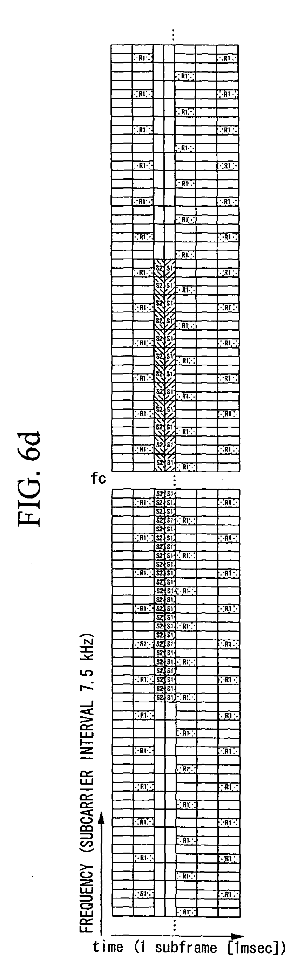

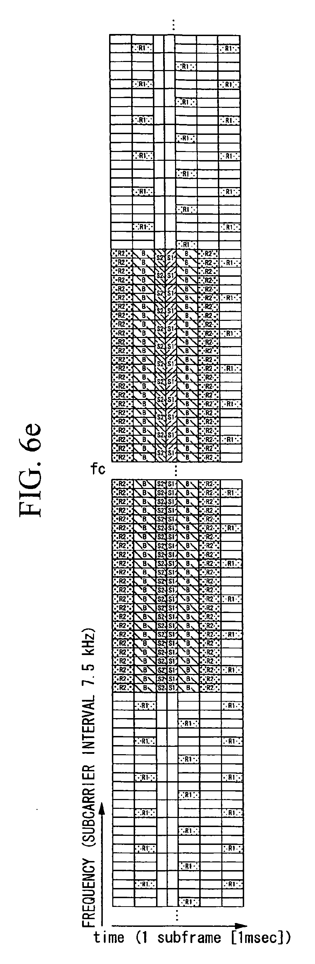

The data symbol and the BCH symbol generated by the first modulation unit 45 and the second modulation unit 46, the PSCH, the SSCH, the cell-common RS, and the cell-specific RS are arranged in resource elements by the symbol arrangement unit 40 for a prescribed symbol arrangement. For example, they are arranged as shown in FIG 6, which will be described. Each arranged symbol is converted into a signal in a time domain by an IFFT processing unit 42. Then, the signal is converted into a signal in a radio frequency band by a radio unit 44, which is then transmitted from a transmission antenna. In the present embodiment, one transmission antenna is included, but a plurality of transmission antennas may be included for MIMO (multi-input multi-output) communication. The functional block diagram of the transmission unit of the base stations 32, 32a, and 32b according to the present invention has been described.

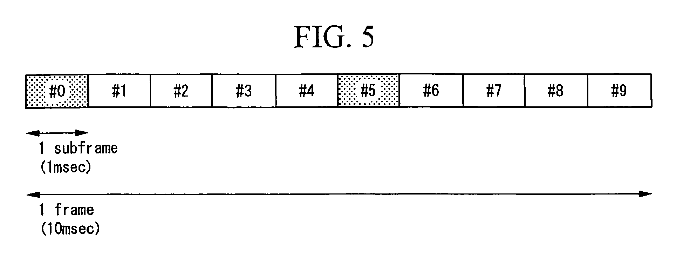

Next, a method for the arrangement in the symbol arrangement unit 40 described above will be described. FIG. 5 is a diagram showing a signal format for the base station in the present embodiment. A length of a frame is 10 msec and the frame includes 10 sub-frames #0 to #9 (each sub-frame length is 1 msec). #0 and #5 indicate sub-frames in which a broadcast channel or a synchronization channel is included. Only the MBMS data symbol and the cell-common RS are included in the sub-frames #1 to #4 and #6 to #9.

FIG. 6a is a diagram showing a symbol arrangement of sub-frames #1 to #4 and #6 to #9. A vertical axis indicates frequency and a horizontal axis indicates time. 1 sub-frame (1 msec) includes six OFDM symbols. A cyclic prefix (CP) for reducing effects of a delayed wave of an OFDM signal is added to each OFDM symbol. A subcarrier interval is 7.5 kHz. The MBMS data symbol is arranged in a blank square. The cell-common RS is arranged in a square of a symbol R1. The cell-common RS is sparsely arranged in a frequency direction and a time direction so that a channel estimation value for demodulating the MBMS data symbol can be accurately estimated. The MBMS data symbol and the cell-common RS are common signals in an MBMS area. In a wireless terminal, reception is performed by synthesizing the signals.

FIG 6c is a diagram showing a symbol arrangement of sub-frame #0. For a system band, a broadcast channel and a synchronization channel are included only in a central band with a center frequency fc, and symbols are arranged in other bands, as shown in FIG. 6a. The PSCH is arranged in a square of S1 in the central band, the SSCH in a square of S2, the BCH symbol in a square of B, and the cell-specific RS in a square of R2. These symbols in the central band all are cell-specific signals, not common signals in the MBMS area such as a non-central band of FIGS. 6a or 6b. The cell-specific RS is a signal arranged, for example, for channel estimation for demodulating a cell-specific BCH.

In the present embodiment, the PSCH includes three types of codes, as described above. One of three groups of cell IDs may be specified by specifying the code type. The SSCH includes codes of types corresponding to the cell IDs in the group. The cell ID can be identified by specifying the code.

FIG 6b is a diagram showing a symbol arrangement of sub-frame #5. A difference with sub-frame #0 is that the BCH symbol is not arranged and, correspondingly, the cell-specific RS is not arranged. Instead, the MBMS data symbol and the cell-common RS are arranged, as in the non-central band. The PSCH arranged in #5 includes the same code as the PSCH of sub-frame #0. Meanwhile, the SSCH arranged in #5 includes code different from the SSCH of sub-frame #0. The respective SSCHs of #0 and #5 include associated codes so that frame timing can be detected by detecting the SSCH of sub-frames #0 and #5.

Further, signals other than the PSCH and the SSCH of FIGS. 6a and 6b and the non-central band of FIG. 6c are common signals in the MBMS area, and thus, when transmission power increases, a reception characteristic can correspondingly increase. However, other signals are cell-specific signals and thus, even when the transmission power increases, it simultaneously interferes with other cells and thus there is no effect of reception characteristic enhancement. Thereby, for transmission of the PSCH and the SSCH of FIG 6b or the signals in the central band of FIG. 6c, transmission power thereof is preferably set to be smaller than that of the signals other than the PSCH and the SSCH of FIGS. 6a and 6b and the non-central band of FIG. 6c. Of course, the transmission powers may be set to the same level.

FIGS. 6d and 6e are diagrams showing an example of a symbol arrangement of sub-frames #0 and #5 different from FIGS. 6b and 6c. For a system band, the broadcast channel and the synchronization channel are included only in a central band having a center frequency fc, similar to FIGS. 6b and 6c. A meaning of a square is the same as in FIG. 6b. A difference with FIG. 6b or 6c is that only OFDM symbols in which synchronization channels PSCH and the SSCH are arranged have a half of the length of other OFDM symbols. Thereby, a subcarrier interval is a frequency interval that is twice the subcarrier interval of the other OFDM symbols. Further, MBMS data symbol and a cell-common RS in a non-central band of FIG. 6e are also arranged in the central band. Thus, the OFDM symbol in which the synchronization channel is arranged has a half of the length of the other OFDM symbol, that is, the frequency interval is 15 kHz that is twice the frequency interval of the other OFDM symbols, such that a frequency acquisition range for an initial frequency offset is widened and tolerance of the initial frequency offset is increased. Further, in unicast communication in 3GPP LTE (long term evolution), since the subcarrier interval is 15 kHz and a synchronization channel can be completely the same as unicast, a terminal capable of unicast reception can be simplified.

The signal format or the symbol arrangement is not limited to the arrangement as shown in FIGS. 5 and 6, but the present invention can be embodied as long as the same function as that of the arrangement of FIGS. 5 and 6 is achieved. For example, in the example of FIG 6, while the cell-specific RS is arranged to perform the channel estimation for BCH demodulation, the channel estimation for BCH demodulation may be performed using cell-specific synchronization channels (PSCH and SSCH). In this case, the cell-specific RS for BCH demodulation is unnecessary. In this case, an input of the cell-specific RS shown in FIG. 4 is unnecessary. If both the PSCH and the SSCH are channels common to the MBMS areas, the cell-specific RS for BCH demodulation is necessary. While the BCH is used as the broadcast signal, a signal capable of notifying of information common to all users as cell-specific information may be used. For example, a cell-specific signal such as the PDSCH may be used.

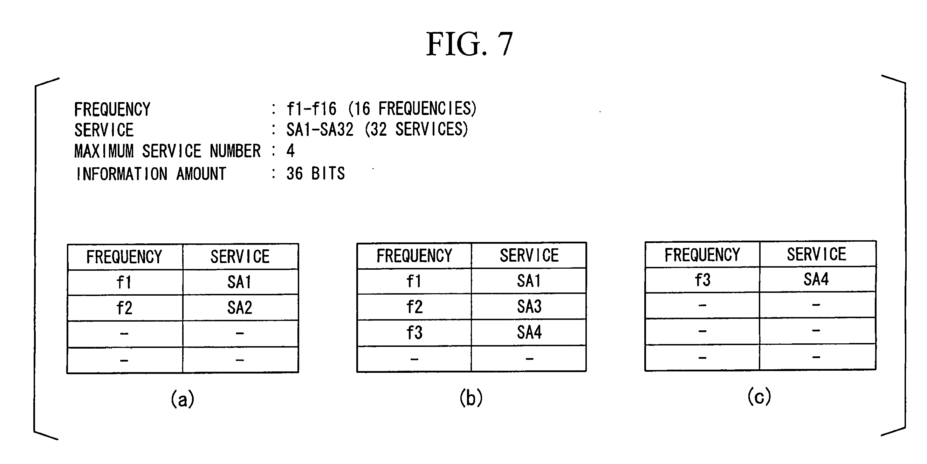

MBMS band information included in broadcast information (broadcast channel: BCH) will be described with reference to FIG. 7. As shown in FIG. 7, when, as the MBMS band information, a frequency band includes 16 frequencies f1 to f16 (4 bit), services include 32 services (5 bits) SA1 to SA32, and a simultaneous maximum service number in each position is 4, a necessary information amount is a total of 36 bits. When a wireless terminal is around the position x1 of FIG. 2, the MBMS band information shown in FIG. 7(a) is broadcasted through the BCH. For example, the MBMS band information shown in FIG 7 (a) is included in the broadcast channel BCH transmitted from BS1-6 (BS2-6). Similarly, when the wireless terminal is located around the positions x2 and x3 of FIG. 2, the MBMS band information shown in FIGS. 7 (b) and (c) is broadcasted through the BCH. For example, the MBMS band information shown in FIG. 7 (b) is included in the broadcast channel transmitted from BS1-35, BS3-9, and BS4-5, and the MBMS band information shown in FIG. 7 (c) is included in the broadcast channel transmitted from BS4-34.

In the example of FIG. 7, the maximum service number is 4. However, when the maximum service number is as great as, for example, 16 and there is only one service as shown in FIG. 7 (c), a bit number indicating information of other 15 services becomes useless. Thereby, the information bit number may be changed according to the maximum service number, like MBMS band information="maximum service number, first MBMS band information, second MBMS band information, ···," instead of using a fixed bit number as the MBMS band information. That is, the information bit number may be flexibly changed into a small information bit number when the service number is small and a great information bit number when the service number is great.

In a system in which it is difficult to store information of such a variable bit number in the BCH, the MBMS band information may be stored in another channel, e.g., a control channel. Of course, even in the case of a fixed information bit number as shown in FIG. 7, when it is difficult to store information of 36 bits in the BCH, the information may be included, for example, in the control channel.

Thus, when the MBMS band information is not included in the BCH, that is, when the cell-specific BCH is unnecessary, the cell-specific BCH shown in FIGS. 6a to 6e may be a BCH common to the MBMS areas, like the MBMS data. In this case, the cell-specific RS, which is necessary for channel estimation for BCH demodulation, is unnecessary. Accordingly, cell-specific synchronization channels (PSCH and SSCH) may be common to the MBMS areas.
In this case, the MBMS band information is included in another channel, e.g., the control channel, such that a cell-specific control channel and a cell-specific RS for demodulating the control channel are separately necessary.

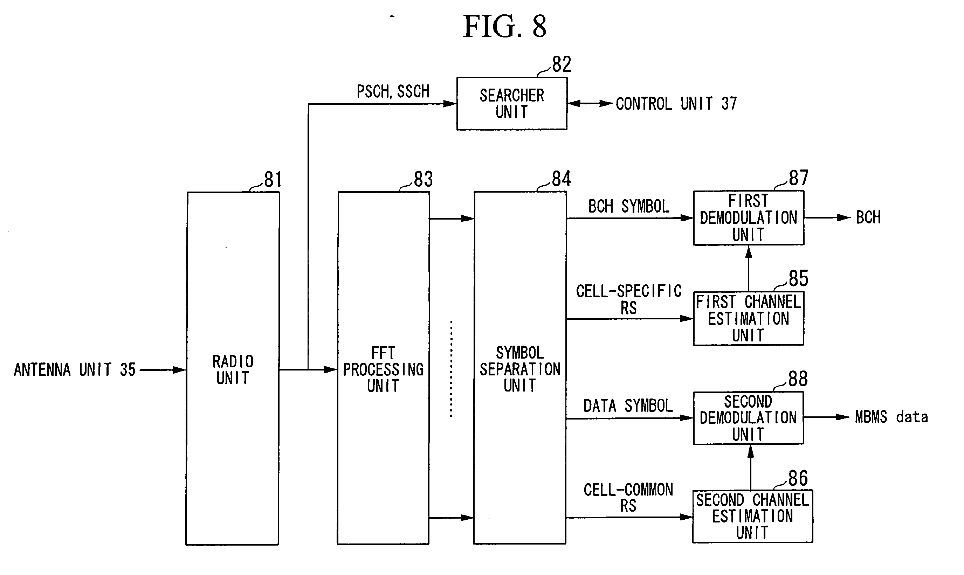

Next, a functional configuration of a reception unit of the wireless terminal according to the present invention will be briefly described. FIG. 8 is a block diagram showing a function of the reception unit of the wireless terminal (corresponding to the reception unit 36 of the wireless terminals MS1 and MS2 of FIGS. 3a and 3b) according to the present invention. The reception unit includes a radio unit 81 which converts a signal in a radio frequency band received by the antenna unit 35 into a baseband signal, a searcher unit 82 which performs cell search using the converted baseband signal, an FFT processing unit 83 which transforms the converted baseband signal in the time domain into a signal in a frequency domain, and a symbol separation unit 84 which extracts a BCH symbol, a data symbol, a cell-specific RS, and a cell-common RS from the signal in a frequency domain. The reception unit further includes a first channel estimation unit 85 which performs channel estimation for BCH demodulation from the extracted cell-specific RS, and a second channel estimation unit 86 which performs channel estimation for MBMS data demodulation from the extracted cell-common RS. The reception unit further includes a first demodulation unit 87 which performs BCH demodulation based on the extracted BCH symbol and an estimated value generated by the first channel estimation unit 85, and a second demodulation unit 88 which performs MBMS data demodulation based on the extracted data symbol and the estimated value generated by the second channel estimation unit 86.

That is, the first demodulation unit 87 constitutes a first demodulation unit which demodulates a signal common to respective cells, and the second demodulation unit 88 constitutes a second demodulation unit which demodulates a signal specific to each cell.
Although not shown, an FFT processing unit for SSCH demodulation is included in the searcher unit 82. Of course, the FFT processing unit of the searcher unit 82 may also serve as the external FFT processing unit 83. Here, when SSCH demodulation is performed in a time domain, it is unnecessary to include the FFT processing unit 83 therein.
The functional configuration of the reception unit 36 of the wireless terminals MS 1 and MS2 according to the present invention has been described.

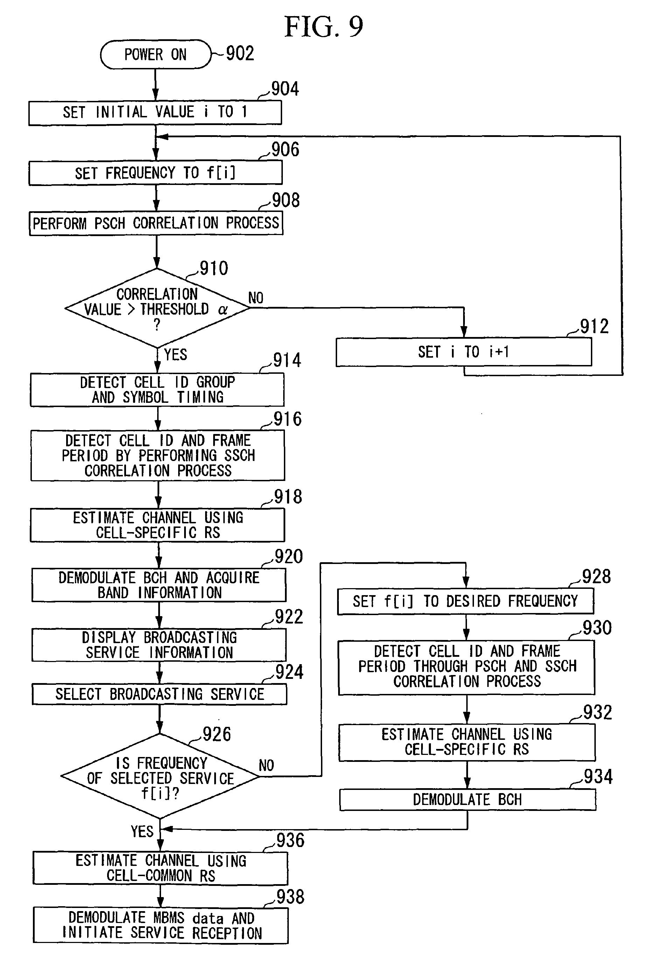

Next, a flow from the wireless terminals MS1 and MS2 being powered ON to desired broadcast MBMS data being received with reference to FIG. 8 is shown in FIG. 9.

When the wireless terminal is powered ON (step 902), the radio unit 81 first sets an initial value as i=1 (step 904). That is, the radio unit 81 sets a down-conversion frequency to a frequency f[1] (step 906). A signal in a radio frequency band (f1) received by the reception antenna is converted into a baseband signal. The converted baseband signal is first input to the searcher unit 82 which performs an initial cell search process. Since signals required by the searcher unit 82 are the PSCH and the SSCH, only the central frequency band fc may be filtered and input as shown in FIG. 6 when input to the searcher unit 82. A correlation process (step 908) is performed with codes as three types of candidates of the PSCH from the signal input to the searcher unit 82.

When a correlation value in any one of three types of codes is greater than a determined threshold α (step 910), it is determined that the correlation can be taken in the code of the PSCH correlation. That is, the PSCH of the MBMS signal provided at a frequency f1 can be detected.

When the correlation value is less than or equal to the threshold α, it is determined that the service is not provided at the frequency f1, and a detection of next service is performed. That is, i is updated to i+1 (step 912) to set to a frequency f[2] of a service as a next search candidate, and the correlation process in three types of PSCH code is similarly performed. This process is iteratively performed until a frequency at which the service is provided can be detected.

When the PSCH of the MBMS signal can be detected, a cell ID group and OFDM symbol timing can be detected (step 914). After the PSCH detection is completed, an SSCH detection process is performed. For the SSCH detection process, since the OFDM symbol timing is known by the PSCH detection, the FFT processing unit 83 in the searcher unit 82 performs the SSCH detection process using the signal in the frequency domain at that timing. The SSCH detection may be performed by performing correlation with code of the detected cell ID group on the signal in the frequency domain. Or, the SSCH may be directly demodulated by calculating a phase rotation amount resulting from a propagation channel for the PSCH included in an OFDM symbol directly before the OFDM symbol in which the SSCH is included. While the SSCH detection in the frequency domain has been described, the detection may be performed through correlation in the time domain without performing an FFT process (in this case, it is unnecessary to provide the FFT processing unit in the searcher unit 82). The SSCH detection process is not limited to the above-described process, but the SSCH detection may be performed using other methods. The cell ID and a frame period can be detected by completing the SSCH detection (step 916). For the frame period, since different codes for the SSCH are used in sub-frames #0 and #5, a sub-frame to which the SSCH belongs can be identified, such that the frame period can be also detected.

The initial cell search process in the searcher unit 82 has been completed. Although a process of correcting a frequency offset or symbol timing is not specified in the above-described initial cell search process, such a process is also performed in the initial cell search.

After the initial cell search is completed, the converted baseband signal is input to the FFT processing unit 83. The converted baseband signal is converted into a signal in a frequency domain by the FFT processing unit 83 and the signal in a frequency domain is input to the symbol separation unit 84. In the symbol separation unit 84, the BCH symbol, the cell-specific RS, the data symbol, and the cell-common RS are extracted based on the cell ID or the frame period obtained by the initial cell search, and input to the first demodulation unit 87, the first channel estimation unit 85, the second demodulation unit 88, and the second channel estimation unit 86, respectively.

First, in order to demodulate the broadcast information, estimation of the propagation channel from a desired cell, that is, channel estimation, is performed using the cell-specific RS (step 918). The BCH is demodulated based on the obtained channel estimation value to acquire the band information included in the BCH (step 920). By acquiring the band information, information of service that is broadcast at that point is obtained, and in order to inform the user of the service information, broadcasting service information is displayed on a display of the wireless terminal (step 922). The user selects service he or she wants to watch from among the broadcasting services (step 924) (using a structure that can be selected by the user together with a display of the broadcasting service information).

If a frequency of the service selected by the user is the same as that detected upon cell search (step 926), the process directly proceeds to an MBMS data demodulation process. If the frequency of the service selected by the user is not the same as that detected upon cell search, a down-conversion frequency of the radio unit 81 is set to a desired frequency (step 928). Then, the searcher unit 82 performs the cell search process, i.e., the PSCH and SSCH correlation process as described above, and performs cell ID and frame period detection (step 930). Then, channel estimation and BCH demodulation using the cell-specific RS are performed, such that the BCH demodulation for the broadcasting service selected by the user is completed (steps 932 and 934).

Here, in the cell search process, when the base station broadcasts a plurality of services as in FIG. 3b, a cell ID or a frame period for the plurality of services may be the same. In this case, detection of the cell ID or the frame period may be unnecessary and the BCH demodulation may also be unnecessary. In such a case, the cell search process or the BCH demodulation process may be omitted and the process may proceed to a demodulation process for next MBMS data.

After the BCH demodulation process is completed, in order to demodulate the MBMS data, estimation of a synthesized propagation channel, i.e., channel estimation, from a desired cell or its peripheral cells is performed using the cell-common RS (step 936). The MBMS data is demodulated based on an obtained channel estimation value, and reception of the broadcasting service selected by the user is initiated (step 938).

The foregoing is the flow until MBMS reception of FIG 9. While in the above flow example, the user selects the broadcasting service after the band information is acquired, the MBMS data demodulation may be performed with a frequency synchronized upon the initial cell search and reception of the service may be initiated while the user is selecting the broadcasting service after the band information is acquired and broadcasting service information is displayed.

In particular, the user may first watch an initially received service instead of selecting broadcasting service information, and select a desired broadcast by switching the service at any time.
Here, for the method of initiating reception at the above-described synchronized frequency or the method of watching the initially received service, when the service is a paid service, it is confirmed initially or at any time whether a user desires to watch the service.

When the service search method of the present invention as described in FIG. 9 is used, the service band information can be obtained without needing to search for other services by searching for and receiving one of broadcasts serviced at that point, thereby greatly reducing a search time.

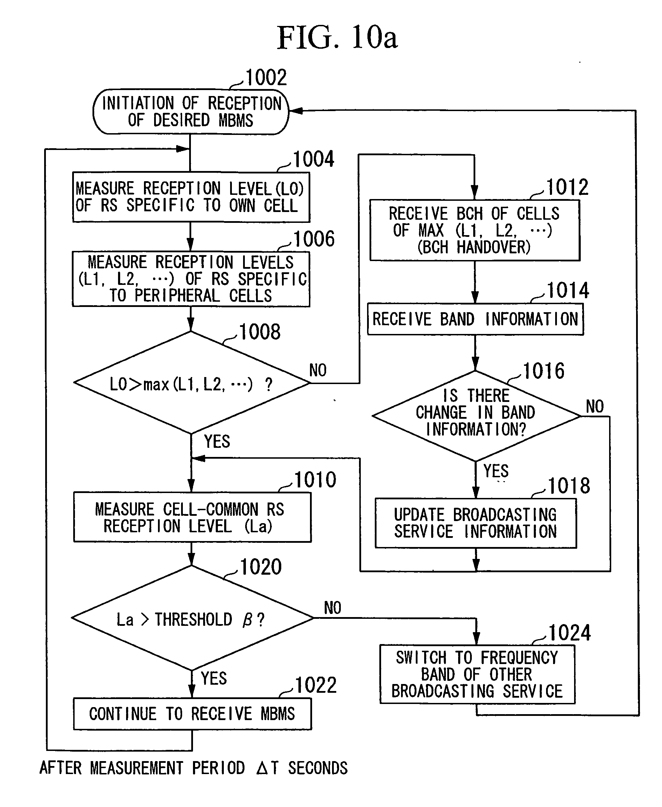

Next, a flow in which a wireless terminal (user) moves between MBMS areas after reception of a desired MBMS is initiated is shown in FIG. 10a. After the reception of the desired MBMS is initiated (step 1002), a reception level L0 of a cell-specific RS of the own cell where the wireless terminal is currently present is measured (step 1004). Similarly, reception levels (L1, L2, ...) of cell-specific RSs of peripheral cells are measured (step 1006). When the reception level L0 of the cell-specific RS of the own cell is greater than a maximum value (max) of the reception levels (L1, L2, ...) of the cell-specific RSs of all the peripheral cells (step 1008), the process directly proceeds to measurement of a next cell-common RS reception level (step 1010).

Meanwhile, when the reception level L0 of the cell-specific RS of the own cell is smaller than the maximum value (max) of the reception levels (L1, L2, ...) of the cell-specific RSs of all peripheral cells (step 1008), BCH reception handover to a cell for which the reception level of the cell-specific RS of the peripheral cell is the maximum value (max) is performed (step 1012). Channel estimation is performed by a cell-specific RS of a handover destination, and BCH demodulation is performed for band information reception (step 1014). When there is a change in the received band information, that is, when there is a change in a service band or service content in the band (step 1016), the broadcasting service information is updated (step 1018). If the broadcasting service information is always displayed on a display of the wireless terminal, the display is updated. Then, the process proceeds to measurement of a cell-common RS reception level. When there is no change in the received band information, the process directly proceeds to the measurement of the cell-common RS reception level (step 1010).

Next, the measurement of the cell-common RS reception level La is performed. When a measurement value La is greater than a certain threshold β (step 1020), the MBMS reception is continuously performed (step 1022). Here, the threshold β is determined as a level of the cell-common RS when a currently received MBMS broadcast can be received at a minimum plus α (error). When the measurement value La is smaller than the threshold β (step 1020), it is determined that the currently received MBMS broadcast cannot be received, and the frequency band is switched to a frequency band of another broadcasting service in the broadcasting service information (step 1024). Reception of the service is initiated (step 1002). While broadcasting service switching is determined based on only the level of the cell-common RS, it may be determined in light of a movement speed of the terminal for high accuracy switching.

Then, the MBMS reception is continuously performed and the above-described flow is iteratively performed again after a determined measurement period of ΔT seconds.

If a flow when the terminal as described in FIG 10a moves is used, even when the terminal crosses the MBMS area, the service search is unnecessary, and broadcasting service information can be held at all times by continuously receiving the band information while performing the BCH handover.

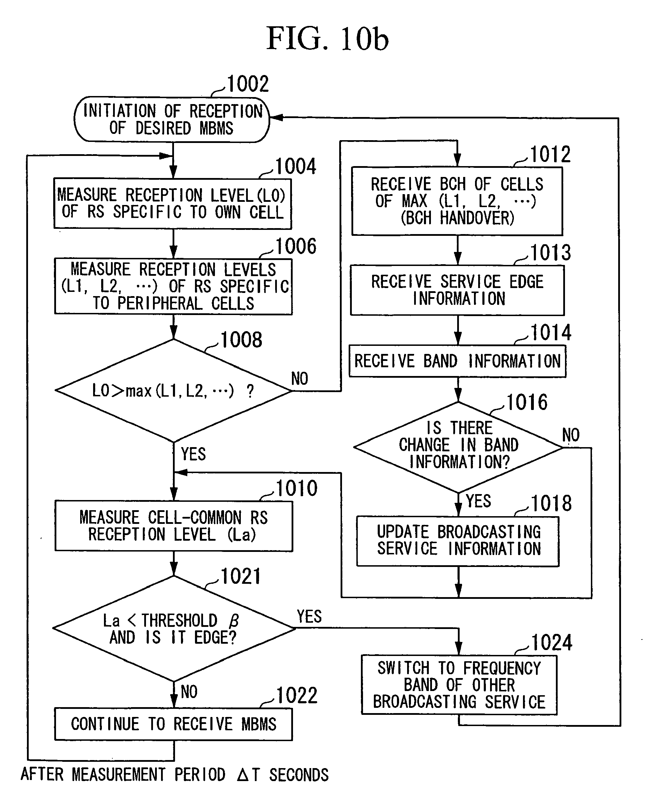

Next, a flow that is different from the flow shown in FIG 10a when the wireless terminal (user) moves between MBMS areas after a desired MBMS reception is initiated, is shown in FIG 10b. A difference is that a base station in this flow broadcasts not only the band information, but also service edge information (area edge information) indicating whether the own station is in a cell at an edge of the MBMS area as the broadcast information. The wireless terminal may determine whether a cell where the wireless terminal is present is the cell at the edge of the MBMS area by receiving the service edge information.

Here, only differences will be described. Following the BCH handover (step 1012), service edge information is received (step 1013). Information acquired herein is used for determination as to whether the broadcasting service is to be switched, which will be described next. While in FIG. 10a, it is determined whether the broadcasting service is to be switched based on only the reception level of the cell-common RS, such a determination in FIG 10b is made based on both the cell-common RS reception level La and the service edge information (step 1021). Specifically, when La is smaller than the threshold β and the wireless terminal is at a service edge, the frequency band is switched to a frequency band of another broadcasting service (step 1024) and the MBMS reception is continuously performed (step 1022).

The control as described above can sufficiently prevent switching to another service from occurring as the reception level of the cell-common RS temporarily decreases and becomes smaller than the threshold β due to effects of a surrounding environment, despite being in the MBMS area (when service edge information does not indicate the edge).

While the above flow is used with a combination between the band reception information and the service edge information, the service edge information may be solely used. For example, when the wireless terminal at the edge is known from the received service edge information, the user can recognize that a new movement will interrupt the service. Accordingly, for example, when the user is performing broadcast recording, he or she can determine to stop the movement.

In the above-described embodiment, the example of the system as shown in FIG. 2, that is, the system in which there are no plurality of services in the same frequency band and the same position, has been described. However, in 3GPP, an MBMS system in which there are a plurality of services in the same frequency band and the same position has also been studied. For example, a method of dividing two services into a subcarrier in a high frequency band in the same frequency band and a subcarrier in a low frequency band, or a method of dividing the services in time may be considered. An embodiment in such a case will be described.

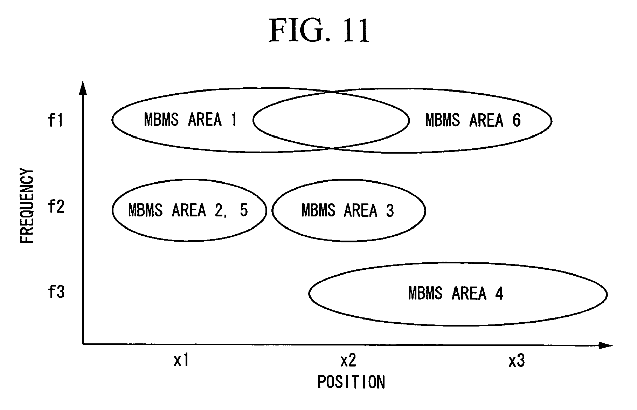

FIG. 11 shows a conceptual diagram of a system in such a case. FIG. 11 shows a state in which an SA2 (service 2) broadcast and an SA5 (service 5) broadcast are simultaneously serviced in a frequency band f2 around a position x1, and an SA1 (service 1) broadcast and an SA6 (service 6) broadcast are simultaneously serviced in a frequency band f1 around a position x2.

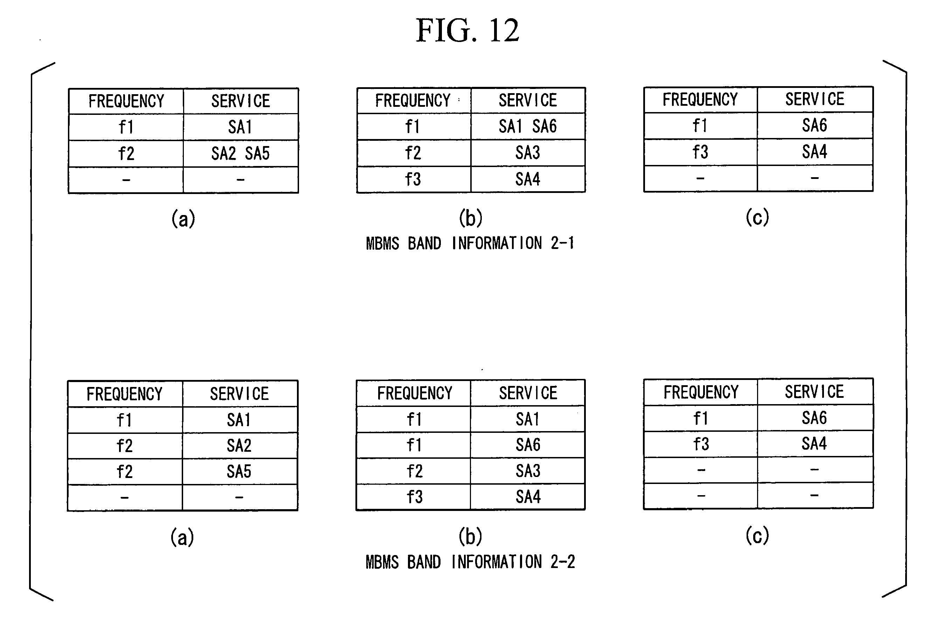

Even in such a system, a difference is only whether service is divided into subcarriers or in time, and the system may be implemented as in the system as shown in FIG. 2. In the case of FIG. 11, band information is as shown in MBMS band information 2-1 or 2-2 of FIG. 12 and has a changed format, and the implementation is the same as described in the system as shown in FIG. 2. Further, (a), (b), and (c) in FIG 12 show band information broadcasted in the positions x1 , x2, and x3 in FIG. 11, respectively.

(a) of the MBMS band information 2-1 includes a record in which a frequency f1 is associated with the SA1 (service 1) broadcast, and a record in which a frequency f2 is associated with the SA2 (service 2) broadcast and the SA5 (service 5) broadcast. (b) of the MBMS band information 2-1 includes a record in which the frequency f1 is associated with the SA1 (service 1) broadcast and the SA6 (service 6) broadcast, and a record in which the frequency f2 is associated with the SA3 (service 3) broadcast. (c) of the MBMS band information 2-1 includes a record in which the frequency f1 is associated with the SA6 (service 6) broadcast, and a record in which the frequency f3 is associated with the SA4 (service 4) broadcast. Further, the MBMS band information 2-2 has the same content as the MBMS band information 2-1, but when one frequency is associated with a plurality of services, the associations are defined as a plurality of records, one for each service, instead of the association being defined as one record as in the MBMS band information 2-1. For example, (a) of the MBMS band information 2-2 that is the band information of the position x1 includes a record in which the frequency f1 is associated with the SA1 (service 1) broadcast, a record in which the frequency f2 is associated with the SA2 (service 2) broadcast, and a record in which the frequency f2 is associated with SA5 (service 5) broadcast.

The method as described above allows the present invention to be implemented even in an MBMS system in which there are a plurality of services in the same frequency band and the same position.

While in the above embodiment, the band information is received by the cell-specific broadcast information, service information about a frequency band for various services, as well as the band information, can be received by the cell-specific broadcast information or an equivalent cell-specific signal. For example, part of important information of service content can be temporarily received by a service other than a frequency band being watched.

While the present invention has been described in detail based on the concrete embodiments, various modifications may be made to the present invention without departing from the scope of the invention. Accordingly, a technical range of the present invention is not limited to the above-described embodiments.

### Reference Symbols

- 31, 31a, 31b: antenna unit
- 32, 32a, 32b: transmission unit
- 33: control unit
- 35: antenna unit
- 36: reception unit
- 37: control unit
- 40: symbol arrangement unit
- 42: IFFT processing unit
- 44: radio unit
- 45: first modulation unit
- 46: second modulation unit
- 81: radio unit
- 82: searcher unit
- 83: FFT processing unit
- 84: symbol separation unit
- 85: first channel estimation unit
- 86: second channel estimation unit
- 87: first demodulation unit
- 88: second demodulation unit

## Claims

1. A wireless communication system comprising a plurality of areas including a plurality of cells each including a single frequency network using a given frequency band, and providing multimedia broadcast/multicast service to wireless terminals located in the areas, the areas being arranged in directions of a plurality of different positions and a plurality of different frequencies,
wherein the plurality of areas using different frequency bands are arranged to overlap each other so that different multimedia broadcast/multicast services can be simultaneously provided to the wireless terminal located at a given point.

2. The wireless communication system according to claim 1, wherein each cell comprises a wireless transmission apparatus which transmits the multimedia broadcast/multicast service, and the wireless transmission apparatus transmits a signal common to respective cells of a multimedia broadcast/multicast service area to which the apparatus belongs among multimedia broadcast/multicast service areas in the area, and a signal specific to a cell to which the apparatus belongs.

3. The wireless communication system according to claim 2, wherein the specific signal includes service information about other multimedia broadcast/multicast service areas that simultaneously provide different multimedia broadcast/multicast services.

4. The wireless communication system according to claim 2, wherein the specific signal includes position information of the multimedia broadcast/multicast service area to which the apparatus belongs.

5. The wireless communication system according to claim 2, wherein the specific signal includes a synchronization signal including code specific to each cell.

6. The wireless communication system according to claim 2, wherein the specific signal includes a reference signal specific to each cell.

7. The wireless communication system according to claim 2, wherein the common signal includes multimedia broadcast/multicast service data, and a reference signal common to the respective cells.

8. The wireless communication system according to claim 3, wherein the service information is band information, the band information indicating the frequency band used for the multimedia broadcast/multicast service in the other multimedia broadcast/multicast service areas, and service content.

9. The wireless communication system according to claim 3, wherein the specific signal includes a broadcast signal used to transmit the service information.

10. The wireless communication system according to claim 4, wherein the position information is area edge information indicating a boundary of a multimedia broadcast/multicast service area to which the apparatus belongs.

11. The wireless communication system according to claim 4, wherein the specific signal includes a broadcast signal used to transmit the position information.

12. A wireless transmission apparatus included in each cell of the multimedia broadcast/multicast service system according to claim 1, which transmits the multimedia broadcast/multicast service, wherein the wireless transmission apparatus transmits a signal common to respective cells of a multimedia broadcast/multicast service area to which the apparatus belongs, and a signal specific to a cell to which the apparatus belongs.

13. The wireless transmission apparatus according to claim 12, wherein the specific signal includes service information about other multimedia broadcast/multicast service areas that simultaneously provide different multimedia broadcast/multicast services.

14. The wireless transmission apparatus according to claim 12, wherein the specific signal includes position information of the multimedia broadcast/multicast service area to which the apparatus belongs.

15. The wireless transmission apparatus according to claim 12, wherein the specific signal includes a synchronization signal including code specific to each cell.

16. The wireless transmission apparatus according to claim 12, wherein the specific signal includes a reference signal specific to each cell.

17. The wireless transmission apparatus according to claim 12, wherein the common signal includes multimedia broadcast/multicast service data and a reference signal common to the respective cells.

18. The wireless transmission apparatus according to claim 13, wherein the service information is band information, the band information indicating the frequency band used for the multimedia broadcast/multicast service in the other multimedia broadcast/multicast service areas, and service content.

19. The wireless transmission apparatus according to claim 13, wherein the specific signal includes a broadcast signal used to transmit the service information.

20. The wireless transmission apparatus according to claim 14, wherein the position information is area edge information indicating a boundary of the multimedia broadcast/multicast service area to which the apparatus belongs.

21. The wireless transmission apparatus according to claim 14, wherein the specific signal includes a broadcast signal used to transmit the position information.

22. A wireless transmission apparatus included in each cell of a wireless communication system comprising areas including a plurality of cells each including a single frequency network using a given frequency band, and providing multimedia broadcast/multicast service to wireless terminals located in the areas, the wireless transmission apparatus transmitting the multimedia broadcast/multicast service,
wherein the wireless transmission apparatus transmits a signal common to respective cells in an area to which the apparatus belongs and a signal specific to a cell to which the apparatus belongs, the specific signal including position information of the multimedia broadcast/multicast service area.

23. The wireless transmission apparatus according to claim 22, wherein the position information is area edge information indicating a boundary of the multimedia broadcast/multicast service area to which the apparatus belongs.

24. The wireless transmission apparatus according to claim 22, wherein the specific signal includes a synchronization signal including code specific to each cell.

25. The wireless transmission apparatus according to claim 22, wherein the specific signal includes a reference signal specific to each cell.

26. The wireless transmission apparatus according to claim 22, wherein the common signal includes multimedia broadcast/multicast service data and a reference signal common to the respective cells.

27. A wireless terminal which receives the multimedia broadcast/multicast service transmitted by the wireless transmission apparatus according to claim 12 or 22, the wireless terminal comprising:
a first demodulation unit which demodulates the common signal; and
a second demodulation unit which demodulates the specific signal.

28. The wireless terminal according to claim 27, wherein the second demodulation unit demodulates the specific signal by performing estimation of a propagation channel for the specific signal using a reference signal included in the specific signal.

29. The wireless terminal according to claim 27, wherein the second demodulation unit demodulates the specific signal by performing estimation of a propagation channel for the specific signal using a synchronization signal included in the specific signal.

30. The wireless terminal according to claim 27, wherein the specific signal includes service information about other multimedia broadcast/multicast service areas that simultaneously provide different multimedia broadcast/multicast services, the service information including band information indicating the frequency band used for the multimedia broadcast/multicast service in the other multimedia broadcast/multicast service areas, and service content, and the wireless terminal detects a frequency band in which one multimedia broadcast/multicast service is performed, and then performs search of another multimedia broadcast/multicast service that can be received by acquiring the band information from the specific signal.

31. The wireless terminal according to claim 30, wherein the common signal includes multimedia broadcast/multicast service data, and a reference signal common to respective cells, and when a reception level of the common reference signal is smaller than a given threshold, the wireless terminal selects the other multimedia broadcast/multicast service that can be received, based on the acquired band information.

32. The wireless terminal according to claim 30, wherein the specific signal includes position information of the multimedia broadcast/multicast service area to which the wireless terminal belongs, the position information including area edge information indicating a boundary of the multimedia broadcast/multicast service area to which the wireless terminal belongs, and when a reception level of the common reference signal is smaller than a given threshold and the acquired area edge information indicates the boundary, the wireless terminal selects the other multimedia broadcast/multicast service that can be received, based on the acquired band information.

33. A symbol arrangement method of arranging, in a symbol arrangement table, an MBMS data symbol, a BCH symbol, a primary synchronization symbol, a secondary synchronization symbol, a cell-common reference signal symbol, and a cell-specific reference signal symbol obtained by modulating multimedia broadcast/multicast service data, control data, and a broadcast signal, the symbol arrangement table being formed by arranging frames at given subcarrier intervals in a frequency axis direction, and the frame including ten sub-frames, each including a plurality of OFDM symbols, coupled in a time axis direction,
wherein the sub-frames are classified into 3, the cell-common reference signal symbol and the MBMS data symbol being arranged in the sub-frames of a first classification, the primary synchronization symbol, the secondary synchronization symbol, the cell-specific reference signal symbol and the BCH symbol being arranged in the sub-frames of a second classification, and the cell-common reference signal symbol, the MBMS data symbol, the primary synchronization symbol and the secondary synchronization symbol being arranged in the sub-frames of a third classification.

34. The symbol arrangement method according to claim 33, wherein the symbols are in the sub-frames of the second classification and the third classification, with a subcarrier interval of the primary synchronization symbol and the secondary synchronization symbol being a frequency interval that is twice the subcarrier interval of the other symbols.
